Europäisches Patentamt

European Patent Office

Office européen des brevets

(11) Veröffentlichungsnummer: **0 232 547**
**A2**

## (12) EUROPÄISCHE PATENTANMELDUNG

(21) Anmeldenummer: 86118075.0

(22) Anmeldetag: 24.12.86

(51) Int. Cl.4: **H02M 7/757**

(30) Priorität: 03.02.86 DE 3603219

(43) Veröffentlichungstag der Anmeldung:
**19.08.87 Patentblatt 87/34**

(84) Benannte Vertragsstaaten:
**FR SE**

(71) Anmelder: **BBC Aktiengesellschaft Brown,
Boveri & Cie.
Haselstrasse
CH-5401 Baden(CH)**

(72) Erfinder: **Kloss, Albert
Ahornstrasse 1
CH-5442 Fislisbach(CH)**
Erfinder: **Schäfer, René
Gerstenweg 7
CH-5034 Suhr(CH)**

(54) Unter- und Übersynchrone Stromrichterkaskade sowie Verfahren zu deren Betrieb.

(57) Unter-und übersynchrone Stromrichterkaskaden mit einer Asynchronmaschine (5) mit Schleifringläufer, bei der die im untersynchronen motorischen oder übersynchronen generatorischen Betrieb freiwerdende Schlupfleistung über einen Umrichter - (36) dem Stromversorgungsnetz (1) wieder zugeführt wird, werden zum Antrieb von Pumpen, Ventilatoren und Verdichtern im Leistungsbereich von 500 kW -5 MW verwendet. Damit die unter-und übersynchrone Stromrichterkaskade im untersynchronen Betriebsbereich auch generatorisch und im übersynchronen Betriebsbereich auch motorisch verwendet werden kann, wird der Umrichter (36) mit Gleichstromzwischenkreis so betrieben, dass der Zwischenkreisstrom ($I_d$) kurzzeitig verschwindet, so dass eine Kommutierung der Ventile eines maschinenseitigen Stromrichters (10) möglich ist. Dabei wird der Rotorstrom der Asynchronmaschine (5) mittels eines Koordinatenwandlers (31) über einen maschinenseitigen Zündimpulsgeber (23) nach Betrag - ($I_s$) und Winkel ($\phi$) vorgegeben. Mittels eines Nullstromdetektors (26) wird festgestellt, ob für ein vorgebbares Kurzzeitintervall von 10 $\mu$s der Zwischenkreisstrom ($I_d$) < 10 A und die Spannung an den Thyristoren eines netzseitigen Stromrichters - (12) < 20 V ist, damit über den maschinenseitigen Zündimpulsgeber (23) die Kommutierung der Thyristoren des maschinenseitigen Stromrichters (10) freigegeben werden kann.

FIG.1

## Unter-und übersynchrone Stromrichterkaskade sowie Verfahren zu deren Betrieb

Bei der Erfindung wird ausgegangen von einer unter-und übersynchronen Stromrichterkaskade nach dem Oberbegriff des Patentanspruchs 1. Die Erfindung betrifft auch ein Verfahren zum Betrieb einer derartigen Kaskade.

Mit dem Oberbegriff nimmt die Erfindung auf einen Stand der Technik von unter-und übersynchronen Stromrichterkaskaden Bezug, wie er aus der Dissertation von P. Zimmermann, "Ueber-und untersynchrone Stromrichterkaskade als schneller Regelantrieb", Technische Hochschule Darmstadt, 1979, S. 39 -41 und 84 -91, bekannt ist. Dort ist bei einem Umrichter mit Gleichstromzwischenkreis für eine Drehzahlregelung von Null bis zur 2fachen Synchrondrehzahl eine Drehzahlregelung mit unterlagerter Stromregelung des Zwischenkreisstromes durch den netzseitigen Stromrichter vorgesehen. Der maschinenseitige Stromrichter hat die Aufgabe, den vom netzseitigen Stromrichter eingeprägten Strom so in den Läuferkreis einzuspeisen, dass sich maximales Drehmoment ergibt. Die zugehörigen Impulse liefert ein Zündzeitpunktrechner, der sich an der Ständerspannung und der Läuferstellung orientiert. Wenn in der Nähe der synchronen Drehzahl an den Schleifringen der Asynchronmaschine keine ausreichende Kommutierungsspannung zur Verfügung steht, wird der maschinenseitige Stromrichter nach dem Verfahren der Zwischenkreistaktung in der so erzielten stromlosen Pause weitergeschaltet. Der Befehl zur Zwischenkreistaktung wird auf den Nulldurchgang der Spannung an der Zwischenkreisdrossel synchronisiert und ein parallel zur Zwischenkreisdrossel angeordneter Kurzschlussthyristor gezündet. Ein Nullstromdetektor für den Zwischenkreisstrom gibt den Zündimpulsgeber des maschinenseitigen Stromrichters frei. Eine gleichzeitige Regelung der Netzblindleistung durch die Zwischenkreistaktung ist nicht vorgesehen.

Aus der DE-OS 2 935 320 ist ein Motorsteuersystem bekannt, bei dem der Rotor eines Motors über einen Umrichter mit Gleichstromzwischenkreis an ein Stromversorgungsnetz angeschlossen ist. Für den netzseitigen Stromrichter des Umrichters ist eine Drehzahlregelung mit unterlagerter Stromregelung vorgesehen und für den maschinenseitigen Stromrichter eine Blindleistungsregelung, wobei der Zündwinkel zusätzlich von einer Referenzphase einer induzierten Leistung abhängt, welche in der Sekundärwicklung des Motors induziert wird. Nachteilig dabei ist, dass ein Phasenschieber benötigt wird, der voreilende Blindleistung erzeugt. Der maschinenseitige Stromrichter wird mittels der Rotorspannung kommutiert, so dass der Motor nur Blindleistung aus dem Stromversorgungsnetz beziehen, aber nicht an das Netz abgeben kann. Ein übersynchroner Betrieb ist von der Antriebsseite her nicht möglich.

Aus der deutschen Zeitschrift: Regelungstechnische Praxis und Prozess-Rechentechnik 9 (1973), S. 217 -221, ist es für eine Drehzahlregelung einer umrichtergespeisten Asynchronmaschine bekannt, kartesische Wirk-und Blindkomponenten in einem Koordinatenumwandler in den Strombetragsanteil für den netzseitigen Stromrichter und den Phasenwinkel für den maschinenseitigen Stromrichter umzuwandeln. Es wird der Statorstrom in einer drehmomentbildenden Wirkkomponente und in einer flussbestimmenden Blindkomponente geregelt, nicht jedoch die Netzblindleistung und der Rotorstrom. Nachteilig dabei ist, dass zur Kommutierung des Stroms von einem Strang auf den nächsten Löschthyristoren und entsprechend aufgeladene Löschkondensatoren erforderlich sind.

In der Schweizer Firmenzeitschrift Brown Boveri Mitteilungen 4/5 (1982) S. 142 -150 ist ein Antriebssystem mit Schleifringmotor und untersynchroner Stromrichterkaskade als drehzahlvariabler Antrieb für grosse Kreiselpumpen für die Wasserversorgung von Ballungsgebieten und Kraftwerken im Leistungsbereich von 2 MW -20 MW beschrieben. Dabei braucht der Umrichter mit Gleichstromzwischenkreis nicht für die volle, sondern nur für die Schlupfleistung des Motors, entsprechend 30 % -50 % von dessen Nennleistung, ausgelegt zu sein. Der ungesteuerte, maschinenseitige Stromrichter des Umrichters weist Dioden in seinen Brückenzweigen auf. Im Gleichstromzwischenkreis ist ein mittels eines Schnellschalters überbrückbarer Zwischenkreiswiderstand vorge sehen, der bei Netzumschaltungen den Strom im Zwischenkreis begrenzt. Eine derartige Kaskade kann untersynchron nur motorisch und übersynchron nur generatorisch betrieben werden. Zur Deckung des Blindleistungsbedarfs ist zudem meistens eine cos φ-Kompensationseinrichtung erforderlich.

Die Erfindung, wie sie in den Patentansprüchen 1 und 6 definiert ist, löst die Aufgabe, eine unter-und übersynchrone Stromrichterkaskade sowie ein Verfahren zu deren Betrieb anzugeben, die im untersynchronen Betriebsbereich auch generatorisch und im übersynchronen Betriebsbereich auch motorisch betreibbar sind, bei gleichzeitiger Regelbarkeit der Netzblindleistung.

Ein Vorteil der Erfindung besteht darin, dass die unter-und übersynchrone Stromrichterkaskade vielseitiger als die konventionelle anwendbar ist. Ausser der Wirkleistung ist auch Blindleistung regelbar, so dass eine besondere cos $\phi$-Kompensationseinrichtung eingespart werden kann. Durch Abgabe von kapazitiver Blindleistung ans Stromversorgungsnetz können Kosten reduziert werden. Ein weiterer Vorteil besteht darin, dass einfache netzseitige und maschinenseitige Stromrichter mit steuerbaren Drehstrombrücken ohne Kommutierungskondensatoren verwendet werden können. Es sind auch keine Zwangskommutierungshilfsmittel, wie Löschschwingkreise usw., nötig.

Zum einschlägigen Stand der Technik wird zusätzlich auf die Schweizer Firmenzeitschrift Brown Boveri Mitteilungen 4/5 (1982) S. 151 -156 verwiesen. Dort wird als drehzahlvariables Antriebssystem ein Sychronmotor mit Vier quadranten-Umrichter und Erregerstellglied beschrieben. Der Umrichter besteht aus zwei gleichartigen, gesteuerten Stromrichtern in Dreiphasen-Brückenschaltung, die beide gleichspannungsseitig über einen Gleichstromzwischenkreis mit einer Glättungsdrossel gekoppelt sind. Im motorischen Betrieb arbeitet der netzseitige Stromrichter als Gleichrichter, der maschinenseitige als Wechselrichter, der den Sychronmotor mit variabler Frequenz und Spannung speist. Im generatorischen Betrieb (Bremsbetrieb) vertauschen beide Stromrichter ihre Rollen. Beide Stromrichter sind fremdkommutiert, und zwar der netzseitige Stromrichter durch die Netzspannung und der maschinenseitige Stromrichter durch die Maschinenspannung. Eine erste Regelkaskade aus einem Drehzahlregler mit unterlagertem Stromregler macht den netzseitigen Stromrichter zur geregelten Stromquelle. Eine zweite Regelkaskade aus einem Ständerspannungsregler mit unterlagertem Erregerstromregler steuert das Stellglied der Polraderregung. Wegen der Selbstführung des maschinenseitigen Stromrichters durch die Maschinenspannung, die bei sehr tiefen Frequenzen nicht genügt, wird zum Starten der Bereich von 0 bis einigen Hz durch Pulsen des Gleichstromes im Zwischenkreis durchfahren.

Aus der Zeitschrift Neue Technik (NT) Nr. 6 - (1974) S. 215 -227 ist eine Wirk-und Blindleistungsregelung von Netzkupplungsumformern 50/16 2/3 Hz mit Umrichterkaskade bekannt, bei dem die Referenzspannung des maschinenseitigen Steuersatzes in einem näher angegebenen Rotordrehfeldgeber aus der Maschinendrehzahl und der Netzspannung errechnet wird. Durch die Vorgabe der Amplitude und Phasenlage des Rotorstromes lassen sich die Wirkleistung, die Drehzahl und die Blindleistung bzw. der cos $\phi$ der Maschine regeln.

Der Netzkupplungsumformer kann sowohl in untersynchronem wie auch in übersynchronem Betrieb arbeiten. Als Rotorstromrichter wird ein netzkommutierter, steuerbarer Direktumrichter verwendet.

Die Erfindung wird nachstehend anhand eines Ausführungsbeispiels erläutert. Es zeigen:

Fig. 1 ein Schaltbild einer unter-und übersynchronen Stromrichterkaskade,

Fig. 2 ein Diagramm mit Strom-und Spannungskennlinien der Stromrichterkaskade gemäss Fig. 1,

Fig. 3a) ... d) Signaldiagramme über den Stromverlauf im Pulsbetrieb durch den netzseitigen Stromrichter und die Winkelvorgabe durch den maschinenseitigen Stromrichter der Stromrichterkaskade gemäss Fig. 1 für untersynchron generatorischen oder übersynchron motorischen Betrieb,

Fig. 4a) ... d) Signaldiagramme über den Stromverlauf im Pulsbetrieb durch den netzseitigen Stromrichter und die Winkelvorgabe durch den maschinenseitigen Stromrichter der Stromrichterkaskade gemäss Fig. 1 für untersynchron motorischen oder übersynchron generatorischen Betrieb und

Fig. 5 die Abhängigkeit der Wirkleistung und der Blindleistung vom vorgegebenen Rotorstrom der Asynchronmaschine der Stromrichterkaskade gemäss Fig. 1.

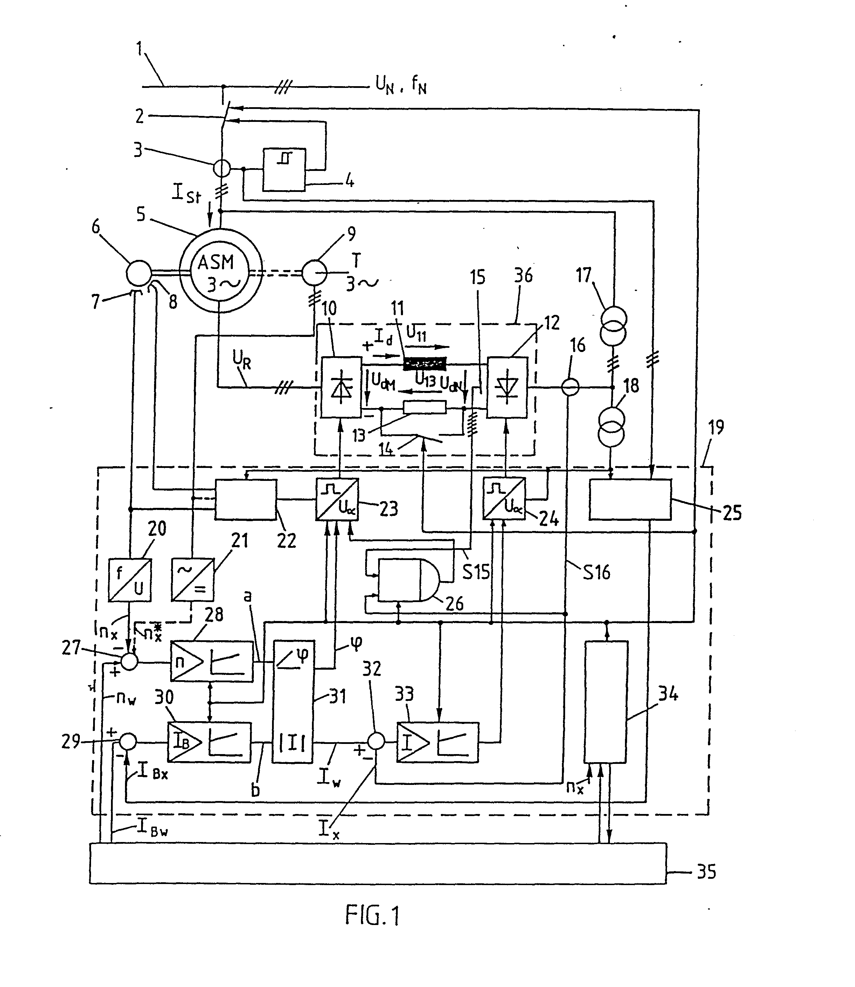

In Fig. 1 ist mit 1 ein dreiphasiges Stromversorgungsnetz mit einer Netzspannung $U_N$ und einer Netzfrequenz $f_N$ bezeichnet, das über einen Netzschalter 2 und einen Stromwandler bzw. Netzstromdetektor 3 einerseits über eine dreiphasige Statorzuleitung mit den Stator-oder Feldwicklungen eines Asynchronmotors bzw. einer Asynchronmaschine 5 mit Schleifringläufer und andererseits mit einer Primärwicklung eines dreiphasigen Leistungs-bzw. Stromrichtertransformators 17 in Verbindung steht.

Ein eingangsseitig mit dem Netzstromdetektor 3 verbundener Schmitt-Trigger bzw. Ueberstromauslöser 4 mit vorgebbarem Ueberstromgrenzwert öffnet in Abhängigkeit von einem den Ueberstromgrenzwert überschreitenden Ueberstrom den Netzschalter 2, um Schäden der unter-und übersynchronen Stromrichterkaskade durch Ueberströme zu vermeiden.

Die Sekundärwicklung des Stromrichtertransformators 17 ist einerseits über einen Umrichter-Stromdetektor 16 mit dem Wechselspannungsausgang eines netzseitigen Stromrichters 12 eines Umrichters 36 und andererseits mit der Primärwicklung eines Hilfs-bzw. Steuerschaltungs-Transformators 18 verbunden. Die Sekundärwicklung des Steuerschaltungs-Transformators 18, an der eine der Netzspannung $U_N$ proportionale Spannung abgreifbar ist, ist mit einem Rotordrehfeldgeber 22, einem netzseitigen Zündimpulsgeber 24 zur Erzeugung der Zündimpulse für den netzseitigen Stromrichter 12 und mit einer Wirk-und Blindstrom-Istwerterfassungseinrichtung 25 verbunden. Die z.B. aus der o.g. Zeitschrift NT 6 (1974) S. 220, Bild 6, bekannte Wirk-und Blindstrom-Istwerterfassungseinrichtung 25 ist eingangsseitig ferner mit dem Ausgang des Netzstromdetektors 3 verbunden, an den ein dem Iststrom proportionales Stromsignal abgreifbar ist. Ausgangsseitig liefert die Wirk-und Blindstrom-Istwerter fassungseinrichtung 25 ein dem Blindstromistwert proportionales Blindstromistwertsignal $I_{Bx}$ an den "-"-Eingang eines Subtrahiergliedes 29.

Der Umrichter mit Gleichstromzwischenkreis 36 weist ausser dem netzseitigen Stromrichter 12 ferner einen maschinenseitigen Stromrichter 10, eine Zwischenkreisdrossel 11, einen Zwischenkreiswiderstand 13 und einen Zwischenkreisschalter 14 auf.

Beide Stromrichter sind als dreiphasige Brückenschaltungen mit Thyristoren in den Brückenzweigen ausgeführt. Die gleichstromseitigen Kathoden der Thyristoren des maschinenseitigen Stromrichters 10 sind über eine von einem Zwischenkreisstrom $I_d$ durchflossene Zwischenkreisdrossel 11 mit den gleichstromseitigen Anoden des netzseitigen Stromrichters 12 verbunden. Die gleichstromseitigen Anoden der Thyristoren des Stromrichters 10 sind über den Zwischenkreiswiderstand 13 mit den gleichstromseitigen Kathoden der Thyristoren des Stromrichters 12 verbunden. Parallel zum Zwischenkreiswiderstand 13 ist der Zwischenkreisschalter 14, vorzugsweise ein abschaltbarer sogenannter GTO-Thyristor vorgesehen, der in Abhängigkeit vom Ausgangssignal einer Schutz-und Steuereinrichtung 34 gesteuert ist.

Mit $U_{13}$ ist der Spannungsabfall im Zwischenkreiswiderstand 13 bezeichnet, mit $U_{11}$ der Spannungsabfall über der Zwischenkreisdrossel 11, mit $U_{dM}$ die Gleichspannung am maschinenseitigen Stromrichter 10 und mit $U_{dN}$ die Gleichspannung am netzseitigen Stromrichter 12. Dabei gilt:
$$U_{dM} = U_{dN} + U_{13} + U_{11}.$$

Mit 15 sind 6 Thyristorspannungssignalleitungen bezeichnet, die Signaleingängen eines Nullstromdetektors 26 zugeführt sind und Thyristorspannungssignale S15 führen, welche den an den einzelnen Thyristoren des Stromrichters 12 anliegenden Spannungen proportional sind. Ein weiterer Signaleingang des Nullstromdetektors 26 ist mit dem Signalausgang des Umrichter-Stromdetektors 16 verbunden, an dem ein dem Umrichterstrom proportionales Umrichter-Stromsignal S16 anliegt.

Die Rotorwicklungen der Asynchronmaschine 5 sind über dreiphasige Rotorzuleitungen mit einer Rotorspannung $U_R$ mit dem Wechselspannungsausgang des maschinenseitigen Stromrichters 10 verbunden. Ein mit der Rotor welle gekoppelter Drehzahlgeber 6 liefert über einen Drehzahlimpulsdetektor 7 ein der Drehzahl des Rotors proportionales Signal an einen Drehzahl-Spannungswandler 20, der ausgangsseitig ein Drehzahlistwertsignal $n_x$ an den "-"-Eingang eines Subtrahiergliedes 27 liefert. Ueber einen "+"-Eingang ist dem Subtrahierglied 27 ein Drehzahlsollwertsignal $n_w$ von einer Steuerzentrale oder von einer Anlagenleittechnik 35 zugeführt.

Das Subtrahierglied 29 erhält über einen "+"-Eingang von dieser Steuerzentrale 35 ein Blindstromsollwertsignal $I_{Bw}$. Der Ausgang des Subtrahiergliedes 27 ist über einen Drehzahlregler 28, an dem ausgangsseitig ein Regelsignal a abgreifbar ist, mit einem ersten Eingang eines Koordinatenwandlers 31 zur Umwandlung von kartesischen Koordinaten in Polarkoordinaten verbunden. Der Ausgang des Subtrahiergliedes 29 ist über einen Blindstromregler 30, an dem ausgangsseitig ein Regelsignal b abgreifbar ist, mit einem zweiten Eingang des Koordinatenwandlers 31 verbunden. Ausgangsseitig liefert der Koordinatenwandler 31 ein Betragssignal bzw. Stromsollwertsignal $I_w = \sqrt{a^2 + b^2}$, das einem "+"-Eingang eines Subtrahiergliedes 32 zugeführt ist, und ein Phasenlagesignal $\phi = \arctan b/a$, das einem Signaleingang eines maschinenseitigen Zündimpulsgebers 23 zugeführt ist.

Das Subtrahierglied 32 weist einen "-"-Eingang auf, der mit dem Ausgang des Umrichter-Stromdetektors 16 verbunden ist. Der Ausgang des Subtrahiergliedes 32 ist über einen Stromregler 33 mit einem Signaleingang des Zündimpulsgebers 24 verbunden. Die mit der Steuerzentrale 35 in Wirkverbindung stehende Schutz-Steuereinrichtung 34 steht ausgangsseitig mit den drei Reglern 22, 30 und 33, mit den beiden Zündimpulsgebern 23 und 24, mit dem Zwischenkreisschalter 14 und mit dem Netzschalter 2 in Steuerverbindung, derart, dass den angesteuerten Einrichtungen Ein-oder Ausschaltbefehle gegeben werden, in Abhängigkeit vom Erreichen einer minimalen Rotordrehzahl $n_{min}$ für Pulsbetrieb, von Sicherungsüberwachungen, Uebertemperatur von Halbleiterbauelementen, Kühlungsausfall, Transformator-Ueberlastschutz usw.

Der Rotordrehfeldgeber 22 ist eingangsseitig einerseits mit dem Ausgang des Drehzahlimpulsdetektors 7 und andererseits mit dem Ausgang eines Synchronimpulsdetektors 8 verbunden, der je Umdrehung der Rotorwelle einen Impuls liefert. Ausgangsseitig ist der Rotordrehfeldgeber 22 mit einem Signaleingang des maschinenseitigen Zündimpulsgebers 23 verbunden. Ein weiterer Signaleingang des Zündimpulsgebers 23 ist mit dem Ausgang des Nullstromdetektors 26 verbunden.

Die mit 20 -34 bezeichneten Einrichtungen bilden eine Steuer-und Regelschaltung 19 für den Umrichter 36.

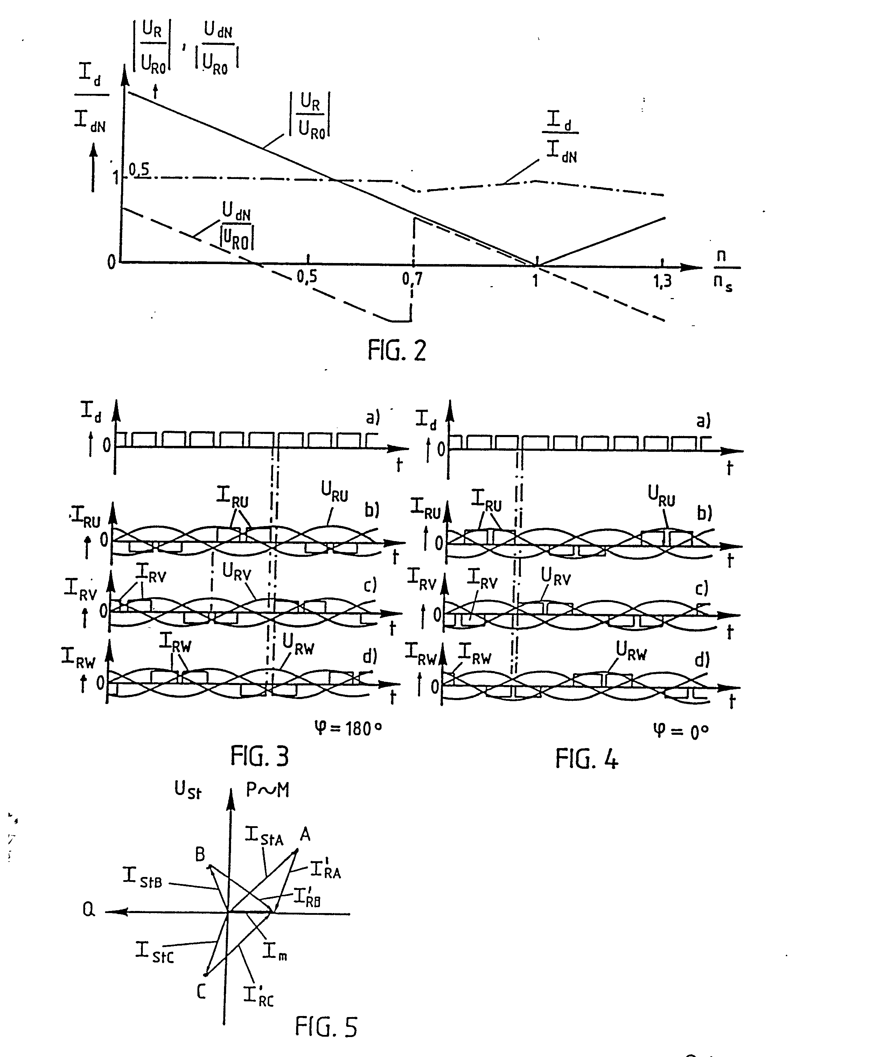

Die Betriebsweise der unter-und übersynchronen Stromrichterkaskade gemäss Fig. 1 soll nun anhand der Figuren 2 -4 erläutert werden. In Fig. 2 sind auf der Ordinate einerseits das Verhältnis von Zwischenkreisstrom $I_d$ zum Zwischenkreisnennstrom $I_{dN}$ und andererseits das Betragsverhältnis von Rotorspannung $U_R$ zu Rotorstillstandsspannung $U_{RO}$ bzw. von Zwischenkreisspannung $U_{dN}$ am Stromrichter 12 zu $U_{RO}$ und auf der Abszisse das Verhältnis von Rotordrehzahl n zur Synchrondrehzahl $n_s$ aufgetragen. Der Einfachheit halber sind physikalische Grössen und deren Signale gleich bezeichnet.

Beim Anfahren der Asynchronmaschine 5 ist der Netzschalter 2 geschlossen und der Zwischenkreisschalter 14 geöffnet. Am Zwischenkreiswiderstand 13 fällt die Spannung $U_{13}$ ab. Der netzseitige Stromrichter 12 wird in seine Wechselrichter-Endlage gesteuert, entsprechend der tiefsten Drehzahl des Regelbereichs. Mit zunehmendem Hochlauf der Asynchronmaschine 5 wird der Stromrichter 12 so geregelt, dass der Anfahrstrom und damit der Zwischenkreisstrom $I_d$ des Umrichters 36 auf einem vorgebbaren Wert, z.B. dem Zwischenkreisnennstrom $I_{dN}$, konstant gehalten wird. Dabei wird der Stromrichter 12 immer mehr in Richtung auf Gleichrichterbetrieb gefahren, wie die gestrichelt dargestellte Linie für $U_{dN} \mid U_{RO} \mid$ zeigt.

Der Anfahrbereich des Stromrichters 12 endet bei $n/n_s = = 0,7 = n_{min}$. Bei der diesem Wert entsprechenden Rotordrehzahl n wird der Zwischenkreiswiderstand 13 durch Schliessen des Zwischenkreisschalters 14 (Zünden des nicht dargestellten GTO-Thyristors) kurzgeschlossen, so dass der Spannungsabfall $U_{13}$ verschwindet. Gleichzeitig wird der Stromrichter 12 wieder in seine Wechselrichter-Endlage gesteuert. Im anschliessenden Betriebs bereich von $0,7 \leq n/n_s \leq n_{max}$ erfolgt die Drehzahlregelung nur über den Stromrichter 12 mit Pulsbetrieb und cos $\phi$-Kompensation. Der Verlauf von $I_d$ ist hier durch das verlangte Drehmoment und die geforderte Blindleistung gegeben.

Der Betrag der Rotorspannung $U_R$ nimmt im Bereich von $0 \leq n/n_s \leq 1$ ab und danach wieder zu.

In den Bereichen $0 \leq n/n_s \leq 0,35$ und $0,7 \leq n/n_s \leq 1$ arbeitet der Stromrichter 12 im Wechselrichterbetrieb, wobei Energie über den Stromrichtertransformator 17 ins Stromversorgungsnetz 1 gespeist wird. In den Bereichen $0,35 \leq n/n_s \leq 0,7$ und $1 \leq n/n_s \leq n_{max}$ arbeitet der Stromrichter 12 im Gleichrichterbetrieb, wobei zusätzlicher Strom aus dem Stromversorgungsnetz bezogen wird.

Es versteht sich, dass anstelle des einen Zwischenkreiswiderstandes 13 zwei oder mehrere in Reihe geschaltete, einzeln kurzschliessbare Zwischenkreiswiderstände verwendet werden können, wobei dann die Umschaltbereiche entsprechend kürzer sind.

In den Fig. 3a) und 4a) ist der Zeitverlauf des Zwischenkreisstromes $I_d$ dargestellt, dessen Pulsform durch den netzseitigen Stromrichter 12 erzeugt wird. Die Fig. 3b) ... 3d) und 4b) ... 4d) zeigen die drei ebenfalls pulsförmigen Rotorphasenströme $I_{RU}$, $I_{RV}$ und $I_{RW}$ in Abhängigkeit von der Zeit t mit Bezug auf den Zwischenkreisstrom $I_d$ in den Fig. 3a) bzw. 4a). Hier wird die Pulsfolge durch das Phasenlagesignal $\phi$ des Koordinatenwandlers 31 für den maschinenseitigen Stromrichter 10 vorgegeben. In den Fig. 3b) ... 3d) und 4b) ... 4d) sind zusätzlich die Rotorphasenspannungen $U_{RU}$, $U_{RV}$ und $U_{RW}$ und deren Phasenlage zu den zugehörigen Rotorphasenströmen $I_{RU}$, $I_{RV}$ und $I_{RW}$ eingetragen.

Die Pulsfolge in den Fig. 3b) ... 3d) entspricht einem untersynchron generatorischen Betrieb mit der Folge U, V, W oder übersynchron motorischem Betrieb mit der Folge W, V, U. Die Pulsfolge in den Fig. 4b) ... 4d) entspricht einem untersynchron motorischen Betrieb mit der Folge U, V, W oder übersynchron generatorischem Betrieb mit der Folge W, V, U.

Wesentlich ist, dass der maschinenseitige Stromrichter 10 über den netzseitigen Stromrichter 12 im Pulsbetrieb zwangskommutiert wird. Dazu muss der Zwischenkreisstrom $I_d$ kurzzeitig, d.h. im Bereich von 10 µs -300 µs, vorzugsweise während 20 µs den Wert Null annehmen. Mittels des Nullstromdetektors 26 wird detektiert, ob der durch den Umrichter-Stromdetektor 16 detektierte Zwischenkreisstrom $I_d$ < 10 A ... 50 A, vorzugsweise < 10 A, ist. Gleichzeitig wird mittels des Nullstromdetektors 26 geprüft, ob die Spannungen an den Thyristoren des Stromrichters 12 > 10 V ... 50 V, vorzugsweise > 20 V, sind. Wenn alle drei Bedingungen für die Mindestzeitdauer, den Maximalstrom (unterschritten) und die Mindestspannung (überschritten) erfüllt sind, werden vom Nullstromdetektor 26 im Zündimpulsgeber 23 die Zündimpulse für den Stromrichter 10 in der neuen Zündlage freigegeben, so dass der Rotorstrom über den Stromrichter 10 weitergeschaltet, d.h. kommutiert wird.

Die Amplitude des Rotorstromes $I_{RU}$, $I_{RV}$ und $I_{RW}$ wird dabei über die Netzstromregelung im Stromrichter 12 und die Phasenlage des Rotorstromes über den maschinenseitigen Steuersatz bzw. Zündimpulsgeber 23 und Stromrichter 10 vorgegeben. Die Referenzspannung des maschinenseitigen Zündimpulsgebers 23 wird in dem Rechengerät bzw. Rotordrehfeldgeber 22 aus der Maschinendrehzahl und der Netzspannung errechnet.

Durch die Vorgabe von Amplitude und Phasenlage des Rotorstromes $I_R$ lassen sich die zum Drehmoment M der Asynchronmaschine 5 proportionale Wirkleistung P bzw. die Drehzahl n und die Blindleistung Q bzw. der cos $\phi$ der Asynchronmaschine 5 regeln, vgl. Fig. 5. Die Drehzahl n ist etwa im Bereich von 75 % -125 % der Synchrondrehzahl $n_s$ regelbar.

In Fig. 5 sind mit $I_m$ der Magnetisierungsstrom mit $I_R$ ($I_{RA}$, $I_{RB}$, $I_{RC}$) der auf den Stator der Asynchronmaschine 5 umgerechnete Rotorstrom $I_R$, mit $I_{St}$ ($I_{StA}$, $I_{StB}$, $I_{StC}$) der Statorstrom und mit $U_{St}$ die Statorspannung bezeichnet. Der Punkt A kennzeichnet Motorbetrieb der Asynchronmaschine 5 mit induktivem cos $\phi$. Der Punkt B kennzeichnet Motorbetrieb der Asynchronmaschine 5 mit kapazitivem cos $\phi$. Der Punkt C kennzeichnet Generatorbetrieb der Asynchronmaschine 5 mit kapazitivem cos $\phi$.

Es versteht sich, dass der Steuerschaltungs-Transformator 18 unter Umständen entfallen kann. Anstelle des Drehzahlgebers 6 kann auch ein mit der Rotorwelle gekoppelter (gestrichelt angedeutet) dreiphasiger Tachometergenerator 9 vorgesehen sein, dessen drei Ausgangssignale über ein Gleichrichtergerät 21 dem "-"-Eingang des Subtrahiergliedes 27 als Drehzahlistwertsignal $n_x$ zugeführt sind, anstelle des Drehzahlistwertsignals $n_x$ am Ausgang des Drehzahl-Spannungswandlers 20. Die drei Ausgangssignale des Tachometergenerators 9 sind dann auch dem Rotordrehfeldgeber 29 zugeführt, anstelle der Ausgangssignale des Drehzahlimpulsdetektors 7 und Synchronimpulsdetektors 8.

Die beschriebene unter-und übersynchrone Stromrichterkaskade sowie das Verfahren zu deren Betrieb sind nicht auf dreiphasige Schaltungen beschränkt, da das gezielt herbeigeführte, kurzzeitige Verschwinden des Zwischenkreisstromes $I_d$ unabhängig ist von der Phasenzahl des Stromversorgungsnetzes 1 und der Asynchronmaschine 5.

Sowohl der netzseitige als auch der maschinenseitige Stromrichter können zwölfpolig aufgebaut werden.

## Ansprüche

1. Unter-und übersynchrone Stromrichterkaskade
   a) mit einer an einen Umrichter (36) angeschlossenen Asynchronmaschine (5) mit Schleifringrotor,
   b) welcher Umrichter einen netzseitigen Stromrichter (12) aufweist, der über einen Gleichstromzwischenkreis mit einem maschinenseitigen Stromrichter (10) verbunden ist,
   c) mit einer Steuerschaltung (19) zum Schalten der Ventile des netzseitigen Stromrichters (12),
   d) die einen netzseitigen Zündimpulsgeber - (24) für den netzseitigen Stromrichter aufweist und
   e) mit einem Drehzahlregler (28), dem eingangsseitig ein Drehzahldifferenzsignal zugeführt ist, das proportional der Differenz zwischen Drehzahlsollwert ($n_w$) und Drehzahlistwert ($n_x$) ist,
   f) mit einem Stromregler (33), der eingangsseitig mit dem Ausgang des Drehzahlreglers (28) und ausgangsseitig mit dem netzseitigen Zündimpulsgeber (24) in Steuerverbindung steht,
   g) mit einem Nullstromdetektor (26), dem eingangsseitig mindestens ein Signal zugeführt ist, das für den Ausschaltzustand von Ventilen des netzseitigen Stromrichters (12) kennzeichnend ist,
   h) mit einem maschinenseitiger Zündimpulsgeber (23) der eingangsseitig mit dem Ausgang des Nullstromdetektors und ausgangsseitig mit dem Steuereingang des maschinenseitigen Stromrichters (10) in Wirkverbindung steht,
   i) mit einem Rotordrehfeldgeber (22), der eingangsseitig mit einem Drehzahlgeber (6) oder mit einem Tachometergenerator (9) und ausgangsseitig mit einem Steuereingang des maschinenseitigen Zündimpulsgebers (23) in Wirkverbindung steht,
   j) dass ein Koordinatenwandler (31) für eine Umwandlung von kartesischen in Polarkoordinaten vorgesehen ist, der eingangsseitig einerseits mit dem Ausgang des Drehzahlreglers (28) und andererseits mit dem Ausgang eines Blindstromreglers - (30) in Wirkverbindung steht,
   k) wobei der Winkelsignalausgang des Koordinatenwandlers mit einem Steuereingang des maschinenseitigen Zündimpulsgebers (23) und
   l) dessen Betragsausgang mit dem Eingang des Stromreglers (33) in Wirkverbindung steht,
   m) wobei ferner dem Blindstromregler eingangsseitig ein Blindstromdifferenzsignal zugeführt ist, das proportional der Differenz zwischen Blindstromsollwert ($I_{Bw}$) und Blindstromistwert ($I_{Bx}$) ist.

2. Unter-und übersynchrone Stromrichterkaskade nach Anspruch 1, dadurch gekennzeichnet,
   a) dass das Betragsignal des Koordinatenwandlers (31) über einen "+"-Eingang eines Subtrahiergliedes (32) mit dem Eingang des Stromreglers (33) verbunden ist,
   b) wobei ein "-"-Eingang des Subtrahiergliedes mit dem Ausgang eines Umrichter-Stromdetektors (16) in Wirkverbindung steht, an dessen Ausgang das Umrichter-Stromsignal (S16) anliegt.

3. Unter-und übersynchrone Stromrichterkaskade nach einem der Ansprüche 1 oder 2, dadurch gekennzeichnet,

a) dass eine Blindstrom-Istwerterfassungseinrichtung (25) vorgesehen ist,

b) die eingangsseitig einerseits mit dem Ausgang eines Netzstromdetektors (3) und

c) andererseits mit dem Ausgang eines Umrichter-Transformators (17) in Wirkverbindung steht und

d) die ausgangsseitig ($I_{Bx}$) über einen "-"-Eingang eines Subtrahiergliedes (29) mit dem Blindstromregler (30) in Wirkverbindung steht,

e) wobei einem " + "-Eingang dieses Subtrahiergliedes das Blindstromsollwertsignal ($I_{Bw}$) zugeführt ist.

4. Unter-und übersynchrone Stromrichterkaskade nach einem der Ansprüche 1 bis 3, dadurch gekennzeichnet, dass der Rotordrehfeldgeber (22) eingangsseitig einerseits mit einem Synchrondrehimpulsdetektor (8) und andererseits mit einem Drehzahlimpulsdetektor (7) des Drehzahlgebers (6) in Wirkverbindung steht.

5. Unter-und übersynchrone Stromrichterkaskade nach einem der Ansprüche 1 bis 4, dadurch gekennzeichnet,

a) dass das den Ausschaltzustand von Ventilen des netzseitigen Stromrichters (10) kennzeichnende Signal wenigstens ein Thyristorspannungssignal (S15) enthält,

b) insbesondere, dass es zusätzlich ein Umrichter-Stromsignal (S16) enthält.

6. Verfahren zum Betrieb einer unter-und übersynchronen Stromrichterkaskade mit einer an einen Umrichter (36) angeschlossenen Asynchronmaschine (5),

a) wobei der Zwischenkreisumrichter (36) der Stromrichterkaskade im Pulsverfahren betrieben wird,

b) wobei ferner der Zwischenkreisstrom ($I_d$) durch Unterbrechen des Stromes über den netzseitigen Stromrichter (12) kurzzeitig verschwindet, so dass eine Kommutierung der Ventile des maschinenseitigen Stromrichters (10) möglich ist, dadurch gekennzeichnet,

c) dass Amplitude und Phasenlage des Zwischenkreisstromes ($I_d$) in Abhängigkeit von einer Soll-Blindleistung ($I_{Bw}$) geregelt werden.

7. Verfahren nach Anspruch 6, dadurch gekennzeichnet,

a) dass ein Weiterschalten der Ventile des maschinenseitigen Stromrichters (10) erst dann vorgenommen wird, wenn während mindestens 10 us der Zwischenkreisstrom ($I_d$) < 50 A ist und wenn gleichzeitig die Spannung der Ventile des netzseitigen Stromrichters (12) grösser als 10 V ist,

b) insbesondere, dass ein Einschalten der Ventile des maschinenseitigen Stromrichters (10) erst dann vorgenommen wird, wenn während mindestens 20 us der Zwischenkreisstrom ($I_d$) < 10 A ist und wenn gleichzeitig die Spannung der Ventile des netzseitigen Stromrichters (12) grösser als 20 V ist.

8. Verfahren nach Anspruch 6 oder 7, dadurch gekennzeichnet, dass der Rotorstrom der Asynchronmaschine (5) im unter-und übersynchronen Betriebsbereich nach Betrag (I) und Winkel ($\phi$) vorgegeben wird.

FIG.1

FIG. 2

$\varphi = 180°$

FIG. 3

$\varphi = 0°$

FIG. 4

FIG. 5